# EUROPÄISCHE PATENTSCHRIFT

(11) **EP 2 485 988 B1**
(45) Veröffentlichungstag und Bekanntmachung des Hinweises auf die Patenterteilung: **09.08.2017**
(21) Anmeldenummer: 10747642.6
(22) Anmeldetag: 01.09.2010
(51) Int. Cl.: C03C 17/02, C03B 20/00, C03B 19/06

(54) **VERFAHREN ZUR HERSTELLUNG EINES BESCHICHTETEN BAUTEILS AUS QUARZGLAS**
METHOD FOR PRODUCING A COATED QUARTZ GLASS COMPONENT
PROCÉDÉ DE FABRICATION D'UN COMPOSANT REVÊTU À BASE DE VERRE DE QUARTZ

(30) Priorität: 10.10.2009 DE 102009049032
(43) Veröffentlichungstag der Anmeldung: 15.08.2012
(73) Patentinhaber: Heraeus Quarzglas GmbH & Co. KG, 63450 Hanau (DE)
(72) Erfinder: WERDECKER, Waltraud, 63456 Hanau am Main (DE); SCHEICH, Gerrit, 63179 Obertshausen (DE); SCHENK, Christian, 55218 Ingelheim (DE)
(74) Vertreter: Staudt, Armin Walter
(86) Internationale Anmeldenummer: PCT/EP2010/062794
(87) Internationale Veröffentlichungsnummer: WO 2011/042262

(56) Entgegenhaltungen:
- WO-A1-2006/021416
- WO-A2-2006/115558
- DE-A1- 10 319 300
- DE-A1-102006 046 619

## Beschreibung

Die Erfindung betrifft ein Verfahren zur Herstellung eines beschichteten Bauteils aus Quarzglas, indem ein Basiskörper aus Quarzglas bereitgestellt wird, der eine Beschichtungsfläche aufweist, auf die eine SiO₂-Schlickerschicht durch Aufsprühen eines SiO₂-Schlickers mit einem Feststoffgehalt im Bereich zwischen 70 und 80 Gew.-% aufgebracht wird, Trocknen der Schlickerschicht zu einer Grünkörperschicht, und Sintern der Grünkörperschicht zu einer SiO₂-haltigen Funktionsschicht.

### Stand der Technik

Bauteile aus Quarzglas werden für eine Vielzahl von Anwendungen eingesetzt, wie beispielsweise in der Lampenfertigung als Hüllrohre, Kolben, Abdeckplatten oder Reflektorträger für Lampen und Strahler im ultravioletten, infraroten und sichtbaren Spektralbereich, im chemischen Apparatebau oder in der Halbleiterfertigung in Form von Reaktoren und Apparaturen aus Quarzglas für die Behandlung von Halbleiterbauteilen, Trägerhorden, Glocken, Tiegeln, Schutzschilden oder einfachen Quarzglas-Bauteilen, wie Rohre, Stäbe, Platten, Flansche, Ringe oder Blöcke.

Zur Einstellung besonderer oder zur Verbesserung der gegebenen mechanischen, optischen oder chemischen Oberflächeneigenschaften wird die Bauteiloberfläche häufig modifiziert, indem das vorab erzeugte Quarzglas-Bauteil ganz oder teilweise mit einer an den spezifischen Verwendungszweck angepassten Funktionsschicht versehen wird. Als Beispiele hierfür seien eine Verbesserung der Standzeit durch eine Beschichtung mit einem Werkstoff mit höherer Erweichungstemperatur oder besserer chemischer Beständigkeit, eine Verringerung der von dem Bauteil ausgehenden Kontaminationsgefahr durch eine Beschichtung aus hochreinem Material, sowie eine Veränderung der Wärmeisolierung oder der Reflektivität durch transparente oder opake Oberflächenschichten genannt.

Ein Verfahren der eingangs genannten Gattung ist aus der DE 2004 051 846 A1 bekannt. Darin wird die Herstellung eines mit einer Reflektorschicht versehenen Quarzglasbauteils beschrieben. Die Reflektorschicht wird mittels eines Schlickerverfahrens hergestellt, indem ein hochgefüllter, gießfähiger, wässriger Schlicker erzeugt wird, der amorphe SiO₂-Teilchen enthält. Dieser wird als Schlickerschicht auf der zu beschichtenden Oberfläche eines Quarzglas-Basiskörpers aufgetragen.

Zum Auftragen der Schlickerschicht auf dem Basiskörper werden Sprühen, elektrostatisch unterstütztes Sprühen, Fluten, Schleudern, Tauchen und Aufstreichen vorgeschlagen. Die Schlickerschicht wird zu einer Grünkörperschicht getrocknet und anschließend zu der Reflektorschicht aus opakem Quarzglas gesintert.

Die amorphen SiO₂-Teilchen des Schlickers werden durch Nassmahlen von SiO₂-Körnung hergestellt und weisen eine mittlere Teilchengröße im Bereich von 1 bis 50 µm auf. Der Feststoffgehalt, die Teilchengröße und die Teilchengrößenverteilung der SiO₂-Teilchen des Schlickers haben Auswirkungen auf die Trockenschwindung der Schlickerschicht. Durch Einsatz gröberer SiO₂-Teilchen kann die Trockenschwindung und damit die Gefahr einer Rissbildung beim Trocknen verringert werden. Bei gleichzeitig hohem Feststoffgehalt zeigen SiO₂-Teilchen im Größenbereich 1 µm bis 50 µm ein gutes Sinterverhalten und eine vergleichsweise geringe Trockenschwindung, so dass die Schlickerschicht ohne Rissbildung getrocknet und gesintert werden kann.

Es hat sich jedoch gezeigt, dass das Fließverhalten des bekannten, hochgefüllten Schlickers zur Herstellung dicker Schichten sowie Schichten auf gewölbten oder gegenüber der Vertikalen geneigten Bauteiloberflächen nicht für alle Auftragsmethoden der Schlickerschicht geeignet ist. Zur Verbesserung des Streichfähigkeit des SiO₂-Schlickers wird in der DE 10 2006 046 619 A1 der Zusatz von SiO₂-Nanoteilchen vorgeschlagen, und zwar mit einem auf den Gesamtfeststoffgehalt bezogenen Gewichtsanteil im Bereich von 0,2 Gew.-% bis 15 Gew.-%. Durch den Zusatz an SiO₂-Nanoteilchen verändert sich das Fließverhalten des SiO₂-Schlickers mehr in Richtung eines strukturviskos-thixotropen Verhaltens, was die Streichfähigkeit des Schlickers verbessert und dem Abfließen von gewölbten Oberflächen entgegenwirkt.

Eine noch weitergehende Fixierung der Schlickerschicht wird anhand des in der DE 10 2005 058 819 A1 beschriebenen Verfahrens erreicht, indem der Schlicker zusammen mit einem textilen Hilfsmittel in Form eines Quarzglas-Vlieses oder eines Zellulosestreifens auf der zu beschichtenden Oberfläche aufgetragen wird. So wird beispielsweise ein mit dem SiO₂-Schlicker getränktes Quarzglas-Vlies auf die zu beschichtende Oberfläche aufgelegt, anschließend getrocknet und gesintert.

Diese Verfahrensweise ermöglicht die Herstellung relativ dicker Schichten auf gewölbten oder zur Vertikalen geneigten Oberflächen, hat aber den Nachteil, dass das textile Hilfsmittel entweder in der Beschichtung verbleibt oder aufwendig ausgebrannt werden muss, was beides mit Nachteilen verbunden und für Anwendungen mit hohen Anforderungen an die Schichthomogenität nicht geeignet ist.

### Technische Aufgabenstellung

Der Erfindung liegt die Aufgabe zugrunde, ein Verfahren anzugeben, das die reproduzierbare Herstellung einer Oberflächenschicht aus Quarzglas auf einem Basiskörper durch einfaches Aufsprühen einer Schlickerschicht auch bei gewölbten oder zur Vertikalen geneigten Oberflächen mit großen Schichtdicken ermöglicht, und die hohen Anforderungen an die Schichthomogenität genügt.

Diese Aufgabe wird ausgehend von dem eingangs genannten Verfahren erfindungsgemäß dadurch gelöst, dass der Schlicker in einer Dispersionsflüssigkeit folgende Komponenten enthält:
(a) splittrige, amorphe SiO₂-Körnung mit einer Korngrößenverteilung mit einem D₅₀-Wert im Bereich zwischen 3 µm und 30 µm mit einem auf den gesamten Feststoffgehalt bezogenen Gewichtsanteil von mindestens 10 Gew.-%,
(b) sphärische, amorphe SiO₂-Teilchen mit einer Teilchengrößenverteilung mit einem D₅₀-Wert im Bereich zwischen 1 µm und 50 µm, mit einem auf den gesamten Feststoffgehalt bezogenen Gewichtsanteil von mindestens 30 Gew.-%,
(c) SiO₂-Nanoteilchen mit Teilchengrößen von weniger als 100 nm mit einem auf den gesamten Feststoffgehalt bezogenen Gewichtsanteil zwischen 0,2 Gew.-% und 10 Gew.-%,
(d) ein nichtionisches Tensid mit einem auf das Volumen der Dispersionsflüssigkeit bezogenen Anteil im Bereich von 0,005 bis 0,5 %, mit der Maßgabe, dass sich die Komponenten (a), splittrige SiO₂-Körnung, (b), sphärische SiO₂-Teilchen, und (c), SiO₂-Nanoteilchen, ergänzen zu 100 Gew.-% SiO₂-Feststoff.

Ein Sprühschlicker muss sich gegensätzlich ausschließende Anforderungen erfüllen. Einerseits soll die Viskosität beim Aufsprühen niedrig sein, um den Sprühvorging selbst sowie eine gleichmäßige Verteilung der Schlickerschicht zu ermöglichen, was durch einen geringen Feststoffgehalt begünstigt wird. Andererseits sollen ein Abfließen der Schlickerschicht von der Oberfläche und eine Rissbildung beim Trocknen der Schlickerschicht vermieden werden, was durch einen hohen Feststoffgehalt begünstigt wird, der in aller Regel auch mit einer hohen Viskosität einhergeht. Es hat sich gezeigt, dass sich die oben genannten vier Komponenten hinsichtlich der Sprüh- und Haftfähigkeit des SiO₂-Schlickers ergänzen, so dass die Herstellung auch dicker, homogener Schlickerschichten durch Aufsprühen eines SiO₂-Schlickers ohne Hilfsmittel auf gewölbten, gekrümmten oder zur Vertikalen geneigten Oberflächen des Basiskörpers ermöglicht wird.
- Die splittrige SiO₂-Körnung trägt zur Integrität der aufgesprühten Schlickerschicht und zur Verzahnung mit der Oberfläche bei und erleichtert so die Herstellung relativ dicker Schichten und verbessert deren Haftung auf gewölbten Oberflächen. Außerdem verändert ein Zusatz an splittriger Körnung die Rheologie des Schlickers in Richtung eines eher dilatanten Fließverhaltens. Dilatanz zeigt sich darin, dass sich in einer Erhöhung der Viskosität bei höheren Scherkräften unabhängig von der Zeit. Es hat sich gezeigt, dass die erwünscht te Wirkung auf Verzahnung und Haftverbesserung eine spezifische Korngrößenverteilung mit einem D₅₀-Wert zwischen 3 µm und 30 µm und einen Gehalt von mindestens 10 Gew.-% voraussetzt. Splittrige Körnung mit von mindestens 10 Gew.-% voraussetzt. Splittrige Körnung mit einem D₅₀-Wert von weniger als 5 µm erhöht die Trockenschwindung der Schlickerschicht, und Körnung mit einem D₅₀-Wert von mehr als 30 µm wirkt einer hohen Feststoffdichte im Schlicker entgegen, was ebenfalls zu einer erhöhten Trockenschwindung beiträgt. Bei einem Gewichtsanteil von weniger als 10 Gew.-% ergibt sich ein geringer Beitrag zu der Verzahnung und Haftverbesserung der Schlickerschicht. Die splittrige Körnung wird am einfachsten durch Mahlen hergestellt, vorzugsweise durch Nassmahlen.
- Der Sprühschlicker ist ein Komposit-Schlicker, der außer der splittrigen SiO₂-Körnung auch einen Anteil an amorphen, sphärischen SiO₂-Teilchen enthält. Je höher der Anteil an sphärischen Teilchen ist, umso höher kann die Feststoffdichte in der Schlickerschicht nach dem Aufsprühen eingestellt werden, was der Entstehung von Spannungen beim Trocknen und Sintern entgegenwirkt. Die sphärischen SiO₂-Teilchen haben eine Teilchengrößenverteilung mit D₅₀-Werten zwischen 1 und 50 µm. Sphärische Teilchen mit einem D₅₀-Wert von weniger als 1 µm erhöhen die Trockenschwindung der Schlickerschicht, und Teilchen mit einem D₅₀-Wert von mehr als 50 µm wirken einer hohen Feststoffdichte im Schlicker eher entgegen. Bei einem geringen Gewichtsanteil von weniger als 30 Gew.-% ergibt sich ein zu vernachlässigender Beitrag zu der erwünscht hohen Feststoffdichte in der aufgesprühten Schlickerschicht. Die sphärischen SiO₂-Teilchen werden am einfachsten durch Synthese nach dem CVD-Verfahren erzeugt und sind im Handel erhältlich.
- Das Tensid setzt die Grenzflächenspannung des SiO₂-Schlickers herab und erhöht so dessen Viskosität bei geringen Scherspannungen. Die Zugabe des Tensids verändert somit auch die Rheologie des Schlickers. Es zeigt sich, dass der SiO₂-Schlicker im Ruhezustand und bei Einwirkung geringer Scherkräfte relativ fest wird, was einem Abrutschen der Schlickerschicht auf gewölbten Oberflächen entgegenwirkt und auch die Herstellung relativ dicker Schichten erleichtert. Tenside enthalten jedoch häufig Verunreinigungen, insbesondere alkalihaltige Verbindungen. Beim Erhitzen von Quarzglas bewirken bereits geringe Konzentrationen derartiger Alkaliverbindungen eine Kristallisation unter Bildung von Cristobalit. Eine Cristobalit-Bildung beim Sintern der Schlickerschicht kann jedoch zu Rissen und Abplatzungen der Schicht führen, da sich die thermischen Ausdehnungskoeffizienten von Cristobalit und Quarzglas unterscheiden. Daher wird gemäß der Erfindung ein nichtionisches, alkalifreies Tensid eingesetzt, und der Anteil an Tensid im Schlicker wird so gering wie möglich gehalten, nämlich im Bereich von 0,005 bis 0,5 Vol.-% (bezogen auf das Volumen der Dispersionsflüssigkeit).Geeignete nichtionische Tenside sind beispielsweise Fettalkoholethoxylate, Fettalkoholpropoxylate, Alkylglucoside, Alkylpolyglucoside, Oktylphenolethoxylate oder Nonylphenolethoxylate.
- Ein möglichst geringer Zusatz von Tensid wird gemäß der Erfindung durch den zusätzlichen Einsatz von SiO₂-Nanoteilchen ermöglicht. Durch den Zusatz der SiO₂-Nanoteilchen wird die Oberfläche des im Schlicker enthaltenen Feststoffes relativ stark erhöht, was die Wirkung des Tensids verbessert. Die SiO₂-Nanoteilchen wirken für das Tensid insoweit als "Aktivator", so dass relativ geringe Mengen an Tensid erforderlich sind. Nanoteilchen bestehen typischer Weise aus einem Verbund einiger Tausend SiO₂-Moleküle und haben üblicherweise eine spezifische Oberfläche nach BET im Bereich von 50 bis 400 m²/g. Bei einem Gehalt von weniger als 0,2 Gew.-% dieser Teilchen im Schlicker wirken sich die Nanoteilchen auf die Vergrößerung der Feststoffoberfläche im Schlicker nicht nennenswert aus, wohingegen Gehalte von mehr als 10 Gew.-% zu einer verstärkten Schrumpfung der Schlickerschicht beim Trocknen führen, die ein defektfreies Trocknen und Sintern erschweren kann. Die Nanoteilchen versiegeln und verdichten die Außenoberfläche des Grünkörpers und bewirken eine Erhöhung der Grünfestigkeit des getrockneten Schlickers und der Sinteraktivität.

Splittrige SiO₂-Körnung, sphärische SiO₂-Teilchen und SiO₂-Nanoteilchen ergänzen sich - abgesehen von etwaigen Dotierstoffen und Verunreinigungen - zu 100 Gew.-% des SiO₂-Feststoffgehalts.

Der Basiskörper besteht aus synthetisch hergestelltem Quarzglas oder aus Quarzglas, das aus natürlich vorkommenden Rohstoffen erzeugt ist. Das Quarzglas kann transparent oder opak (transluzent) sein.

Nach dem Trocknen der Schlickerschicht wird die glasige SiO₂-Funktionsschicht werkzeugfrei durch Sintern (Schmelzen) der Grünkörperschicht erhalten. Das Sintern oder Sintern der getrockneten Grünkörperschicht erfolgt durch Erhitzen in einem Ofen, oder mittels einer Verbrennungsflamme, mittels Plasma oder Lichtbogen oder mittels eines Lasers mit einer vorgegebenen Arbeitswellenlänge. Dabei kann die Grünkörperschicht eine Komponente enthalten, welche die Arbeitswellenlänge der Laser- oder Plasmastrahlung absorbiert, so dass die Hitzeeinwirkung beim Verdichten zeitlich kurz und lokal beschränkt, und plastische Verformungen oder das Einbringen von thermischen Spannungen weitgehend vermieden werden können. Bei der die Plasma- oder Laserstrahlung bevorzugt absorbierenden Komponente handelt es sich um einen Zusatzstoff in Form von Teilchen anderen chemischen Zusammensetzung als SiO₂ oder um eine Dotierung der amorphen SiO₂-Teilchen, oder es handelt sich um Grenzflächen, an denen die Plasma- oder Laserstrahlung diffus reflektiert und dadurch absorbiert wird.

Die gesinterte Funktionsschicht ist je nach Anwendung transparent oder vollständig oder teilweise opak und zeichnet sich jedem Fall durch Rissfreiheit und durch hohe Haftfestigkeit auf dem Quarzglas des Basiskörpers aus. In ihren Eigenschaften ist sie durch einfache Verfahrensänderungen- etwa der Sintertemperatur oder der Zugabe von Dotierstoffen für eine Vielzahl konkreter Anwendungen, wie etwa für den Einsatz in der Halbleiterfertigung oder der Lampen- und Reaktorfertigung, modifizierbar.

Die SiO₂-Funktionsschicht ist in der Regel in Form einer ebenen Schicht ausgeführt, sie kann aber auch eine Geometrie haben, die einen funktionellen Bestandteil des Bauteils ausmacht, beispielsweise als Verdickung oder Wulst.

Es hat sich als vorteilhaft erwiesen, wenn die splittrige, amorphe SiO₂-Körnung mit einem auf den gesamten Feststoffgehalt bezogenen Gewichtsanteil im Bereich von 20 bis 60 Gew.-% vorliegt, und wenn die splittrige, amorphe SiO₂-Körnung eine Korngrößenverteilung mit einem D₅₀-Wert im Bereich zwischen 5 µm und 20 µm aufweist.

Der Anteil und die Korngrößenverteilung der splittrigen Körnung ergeben einen geeigneten Kompromiss zwischen Verbesserung der Haftfestigkeit und Integrität der Schlickerschicht einerseits und einer möglichst hohen Feststoffdichte und geringen Rissanfälligkeit der Schlickerschicht beziehungsweise der Grünkörperschicht andererseits.

Im Hinblick hierauf hat sich auch eine Verfahrensweise als vorteilhaft erwiesen, bei der die sphärische, amorphe SiO₂-Körnung mit einem auf den gesamten Feststoffgehalt bezogenen Gewichtsanteil im Bereich von 40 bis 80 Gew.-% vorliegt, und wenn die sphärische amorphe SiO₂-Körnung eine Korngrößenverteilung mit einem D₅₀-Wert im Bereich zwischen 5 µm und 40 µm aufweist.

Im Hinblick auf eine möglichst geringe Trockenschwindung und einen möglichst hohen Beitrag zur "Aktivierung" des Tensids hat es sich als günstig erwiesen, wenn die SiO₂-Nanoteilchen mit einem auf den gesamten Feststoffgehalt bezogenen Gewichtsanteil im Bereich von 3 bis 8 Gew.-% vorliegen.

Es wird eine Verfahrensvariante bevorzugt, bei der das Tensid mit einem auf das Volumen der Dispersionsflüssigkeit bezogenen Anteil im Bereich von 0,005 bis 0,05 % vorliegt.

Durch den relativ geringen Anteil an Tensid in der Dispersionsflüssigkeit wird einer Kontamination der SiO₂-Schlickerschicht mit Verunreinigungen vorgebeugt. In Verbindung mit der zusätzlichen Zugabe von SiO₂-Nanoteilchen bewirkt die vergleichsweise geringe Tensid-Konzentration auch bei einem sprühfähigen Schlicker mit geringer Viskosität eine rasche Verfestigung der Schlickerschicht nach dem Sprühauftrag und ermöglicht so ein Auftragen einer gleichmäßigen, fest haftenden und rissfrei zu trocknenden Schlickerschicht auf der Basiskörper-Oberfläche mittels Sprühverfahren.

Als Dispersionsflüssigkeit wird bevorzugt ein Gemisch aus Wasser und einem organischen Lösungsmittel mit niedrigerer Siedetemperatur, vorzugsweise einem Alkohol, eingesetzt.

Hierbei wird ein Teil des Dispersionsmittel-Wassers durch ein organisches Lösungsmittel mit niedrigerer Siedetemperatur als Wasser ersetzt. Durch die niedrigere Siedetemperatur erfolgt das Trocknen des Schlickers bei gleichem Flüssigkeitsanteil schneller als bei einem rein wässrigen Dispersionsmittel; insbesondere auch bereits beim Aufsprühen der Schlickerschicht. Dies führt zu einer schnelleren Fixierung der Schlickerschicht auf der Oberfläche, was einem Abfließen der Schlickerschicht entgegenwirkt. Somit wird durch einen ausreichend hohen Flüssigkeitsanteil die Sprühfähigkeit des Schlickers gewährleistet, und andererseits wird in der Schlickerschicht ein vergleichsweise hoher Feststoffanteil erreicht. Der vollständige Ersatz des Wassers durch ein organisches Lösungsmittel kann zu einem zu raschen Abtrocknen der Schlickerschicht und zu Rissen führen. Bei dem organischen Lösungsmittel mit niedrigerer Siedetemperatur als Wasser handelt es sich vorzugsweise um einen niedrig siedenden Alkohol wie Äthanol oder Pro panol. Geeignete Mischungsverhältnisse sind empirisch zu ermitteln. Im Fall von Äthanol liegen geeignete Anteile im Bereich von 10 bis 75 Vol.-% am Gesamtvolumen der Dispersionsflüssigkeit, besonders bevorzugt im Bereich zwischen 20 Vol.-% und 40 Vol.-%.

Es hat sich auch als vorteilhaft erwiesen, wenn der Feststoffgehalt des SiO₂-Schlickers im Bereich zwischen 74 und 78 Gew.-% liegt.

Ein möglichst hoher Feststoffgehalt trägt zu einer gleichmäßigen und geringen Schwindung der Schlickerschicht bei, so dass Trocknungs- und Sinterrisse vermindert werden. Bei Feststoffgehalten von weniger als etwa 10 Gew.-% kann es leicht zu Trockenrissen kommen. Andererseits erfordert die Sprühfähigkeit des Schlickers eine niedrige Viskosität und damit einen niedrigen Feststoffgehalt. Bei Feststoffgehalten von mehr als 78 Gew.-% ist die Sprühfähigkeit des Schlickers eingeschränkt. Es hat sich gezeigt, dass bei einem Feststoffgehalt innerhalb der genannten Bereiche die aufgesprühte Schlickerschicht ohne Rissbildung getrocknet werden kann. genannten Bereiche die aufgesprühte Schlickerschicht ohne Rissbildung getrocknet werden kann.

Der SiO₂-Gehalt der amorphen SiO₂-Teilchen beträgt vorzugsweise mindestens 99,99 Gew.-%. Dies gilt sowohl für die splittrige SiO₂-Körnung aus auch für die sphärischen SiO₂-Teilchen. Der Feststoffanteil des unter Einsatz derartiger SiO₂-Partikel hergestellten Schlickers besteht zu mindestens 99,99 Gew.-% aus SiO₂. Bindemittel oder dergleichen Zusatzstoffe sind nicht vorgesehen. Der Gehalt an metallischen Verunreinigungen beträgt vorzugsweise weniger als 1 Gew.-ppm. Eine Kontaminations- oder Kristallisationsgefahr geht von diesem Ausgangsmaterial nicht aus. Der Cristobalit-Anteil in der getrockneten SiO₂-Schlickerschicht (=Grünkörperschicht) sollte höchstens 0,1 Gew.-% betragen, da es andernfalls beim Sintern zu einer Kristallisation kommen kann, was zum Ausschuss des Bauteils führen kann.

Bei einer besonders bevorzugten Verfahrensvariante ist vorgesehen, dass zum Erzeugen der Funktionsschicht mehrere aufeinander folgende Lagen der SiO₂-Schlickerschicht aufgebracht werden.

Auf diese Weise sind insbesondere besonders dicke Funktionsschichten und Funktionsschichten mit besonders angepassten Eigenschaften herstellbar.

Im Hinblick hierauf wird eine Verfahrensweise bevorzugt, bei der benachbarte Lagen unterschiedliche Zusammensetzungen aufweisen.

In Abhängigkeit von der Zusammensetzung der jeweiligen Schlickerschichten und den Behandlungsparametern, wie etwa der Temperatur beim Sintern, können Funktionsschichtbereiche mit unterschiedlicher Porosität oder Eigenschaftsgradienten über die Dicke der Funktionsschicht erzeugt werden. So kann beispielsweise eine innere Schicht mit hoher Porosität erzeugt werden, die reflektierende Eigenschaften aufweist und eine Außenschicht, die transparent ist und die zur Versiegelung der Beschichtungsfläche führt. Benachbarte Lagen können sich insbesondere hinsichtlich der Anteile splittriger Krönung, amorpher Partikel und Nanoteilchen sowie deren Größenverteilungen unterscheiden.

Durch einfaches Aufsprühen des erfindungsgemäß modifizierten SiO₂-Schlickers wird insbesondere auch die Herstellung relativ dicker Funktionsschichten erleichtert, so dass das Verfahren bevorzugt zur Erzeugung einer Funktionsschicht mit einer Schichtstärke im Bereich zwischen 0,1 mm und 4 mm eingesetzt wird.

Die Beschichtungsfläche des Basiskörpers kann beim Aufsprühen der Schlickerschicht erwärmt werden, beispielsweise auf eine Temperatur im Bereich von 100 °C bis 1000 °C, vorzugsweise auf eine Temperatur im Bereich von 300 °C bis 800 °C. Dabei wird die Schlickerschicht auf eine heiße Beschichtungsfläche aufgebracht, wie beispielsweise auf einen Basiskörper der in einem Ofen erhitzt wird oder auf einen strangförmigen Basiskörper, der in einem Ziehverfahren aus einem Tiegel oder aus einer Vorform gezogen wird. Durch die hohe Temperatur des Basiskörpers verdampft die Dispersionsflüssigkeit relativ schnell, was einem Abfließen der Schlickermasse entgegenwirkt. Das Auftragen der Schlickerschicht und das Trocknen zur Grünkörperschicht laufen dabei im Wesentlichen gleichzeitig ab. Die Temperatur der Beschichtungsfläche kann sogar so hoch sein, dass es unmittelbar zu einer gewissen thermischen Verfestigung der Schlickerschicht bzw. der Grünkörperschicht kommt.

### Ausführungsbeispiel

Nachfolgend wird die Erfindung anhand von Ausführungsbeispielen erläutert.

### 1. Herstellen eines SiO₂-Grundschlickers mit splittriger SiO₂-Körnung

Für einen Ansatz von 10 kg Grundschlicker (Dispersionsflüssigkeit aus 70 Vol.-% deionisiertem Wasser und 30 Vol.-% Äthanol + SiO₂-Körnung) ) werden in einer mit Quarzglas ausgekleideten Trommelmühle mit ca. 20 Liter Volumeninhalt, 7,5 kg einer amorphen Quarzglaskörnung aus natürlichem Rohstoff mit Korngrößen im Bereich zwischen 250 µm und 650 µm mit 2,5 kg deionisiertem Wasser mit einer Leitfähigkeit von weniger als 3 µS vermischt. Die Quarzglaskörnung wurde vorab in einem Heißchlorierverfahren gereinigt; es wird darauf geachtet, dass der Cristobalitgehalt unter 1 Gew.-% liegt.

Diese Mischung wird mittels Mahlkugeln aus Quarzglas auf einem Rollenbock bei 23 U/min während einer Dauer von 3 Tagen soweit vermahlen, dass sich ein homogener Grundschlicker mit einem Feststoffgehalt von 75 % bildet. Im Verlauf des Vermahlens kommt es infolge des in Lösung gehenden SiO₂ zu einer Absenkung des pH-Werts auf etwa 4.

Die nach dem Vermahlen der Quarzglaskörnung erhaltenen SiO₂-Körnungsteilchen sind splittriger Natur und zeigen eine Teilchengrößenverteilung, die durch einen D₅₀- Wert von etwa 8 µm und durch einen D₉₀-Wert von etwa 40 µm gekennzeichnet ist. Der so erzeugte Grundschlicker zeigt ein eher dilatantes Fließverhalten.

### 2. Herstellen eines SiO₂-Grundschlickers mit sphärischer SiO₂-Körnung

In eine Dispersionsflüssigkeit aus 70 Vol.-% deionisiertem Wasser und 30 Vol.-% Äthanol werden SiO₂-Nanoteilchen mit Durchmessern um 40 nm (im Folgenden auch als "pyrogene Kieselsäure" bezeichnet) sowie handelsübliche, sphärische, amorphe SiO₂-Teilchen eingemischt, und zu einem weiteren Grundschlicker homogenisiert.

Die sphärischen, amorphen SiO₂-Teilchen sind synthetisch hergestellt und liegen in standardisierten Teilchengrößenverteilungen mit D₅₀-Werten von 5 µm, 15 µm, 30 µm und 40 µm vor. Die Teilchengrößenverteilung zeichnet sich jeweils durch ein verhältnismäßig enges Maximum der Größenverteilung im Bereich des jeweiligen D₅₀-Wertes und durch ein Nebenmaximum im Bereich um 2 µm aus.

Die Teilchen werden vorab in einem Heißchlorierverfahren gereinigt. Der Verunreinigungsgehalt der gereinigten Rohstoffkomponenten ist gering und liegt insgesamt bei weniger als 1 Gew.-ppm. Insbesondere der Gehalt an Li₂O beträgt weniger als 10 Gew.-ppb. Diese Rohstoffkomponenten werden in folgender Rezeptur eingesetzt, wobei jede Rohstoffkomponenten mit dem Buchstaben R und ihrem jeweiligen D₅₀-Wert als Appendix bezeichnet ist:

**Rezeptur:**

| | |
|---|---|
| R₃₀ | 250 g |
| R₁₅ | 500 g |
| R₅ | 200 g |

Pyrogene Kieselsäure: 50 g mit BET-Oberfläche von 60 m²/g

Diese Rohstoffkomponenten werden in deionisiertem Wasser mit einer Leitfähigkeit von weniger als 3 µS dispergiert, so dass sich ein Feststoffgehalt von 75 Gew.-% ergibt. Der so erzeugte Grundschlicker zeigt ein thixotropes Fließverhalten. 3. Herstellen eines Sprühschlickers

Durch Mischen und Homogenisieren von Anteilen des ersten, eher dilatanten Grundschlickers mit splittriger Körnung aus natürlich vorkommendem Rohstoff und des zweiten, eher thixotropen Grundschlickers mit amorphen Teilchen aus synthetisch erzeugtem SiO₂ wird ein Sprühschlicker erzeugt. Das Mischungsverhältnis richtet sich in erster Linie nach der Soll-Stärke zu erzeugenden Funktionsschicht und nach Grad der Wölbung oder Neigung der Beschichtungsfläche. Je größer die Sollstärke ist und umso geneigter die Beschichtungsoberfläche, umso höher ist der Anteil an dem ersten Grundschlicker.

Im Ausführungsbeispiel wird eine Funktionsschicht mit einer Soll-Stärke von 2 mm auf der Außenseite eines kuppelförmigen Quarzglas-Reaktors erzeugt, wie er für Ätz- oder CVD-Prozesse bei der Halbleiterherstellung eingesetzt wird. Der Quarzglas-Reaktor hat einen Außendurchmesser von 420 mm, eine Höhe von 800 mm und eine Wandstärke von 4 mm.

Für diesen Einsatzzweck wird 1 Anteil des ersten Grundschlickers mit 2 Anteilen des zweiten Grundschlickers gemischt. Dieser Mischung werden 0,015 Vol.-% (bezogen auf das Volumen des Wassers) ein nichtionisches Tensids beigemischt. Nach dem Homogenisieren wird ein Sprühschlicker erhalten, der sich durch folgende Eigenschaften auszeichnet:
- Komponente K1: Gewichtsanteil (bezogen auf den Gesamtfeststoffgehalt) an splittriger, amorphe SiO₂-Körnung aus natürlichem Quarzglas mit einer Korngrößenverteilung mit einem D₅₀-Wert von 8 µm: 33 %
- Komponente K2: Gewichtsanteil (bezogen auf den Gesamtfeststoffgehalt) an sphärischer, synthetisch erzeugten amorphen SiO₂-Teilchen mit einer Korngrößenverteilung mit einem D₅₀-Wert um 15 µm: 63,5 %
- Komponente K3: Gewichtsanteil (bezogen auf den Gesamtfeststoffgehalt) an SiO₂-Nanoteilchen mit Teilchengrößen von etwa 40 nm: 3,5 %
- Komponente K4: Tensid: 0,015 Vol.-% (bezogen auf das Flüssigkeitsvolumen des Sprühschlickers)
- Komponente K5: Dispersionsmittel: 70 Vol.-% H₂O / 30 Vol.-% Äthanol
- Feststoffgehalt: 75 Gew.-%

### Beschichten eines kuppelförmigen Quarzglas-Rektors

Der Quarzglas-Reaktor wird in eine Sprühkammer eingebracht. Anschließend wird die Außenwandung vollständig - bis auf einen an der Unterseite des Reaktors vorgesehen Flansch - sukzessive durch Aufsprühen des Sprühschlickers mit einer ca. 4 mm dicken SiO₂-Schlickerschicht versehen. Hierfür wird eine Sprühpistole eingesetzt, der kontinuierlich der Sprühschlicker zugeführt wird.

Die so aufgebrachte Schlickerschicht wird langsam getrocknet, indem sie an Luft mehrere Stunden ruht. Die vollständige Trocknung erfolgt unter Einsatz eines IR-Strahlers an Luft. Die getrocknete Grünkörperschicht wird anschließend in bekannter Weise in einem Sinterofen bei einer Temperatur um 1200 °C zu einer rissfreien, homogenen SiO₂-Reflektorschicht aus opakem Quarzglas mit einer Dichte von etwa 1,6 g/cm³ gesintert.

Die Homogenität der Schicht zeigt sich als eine im Wesentlichen gleichmäßige Schichtdicke ohne Ausbildung von "Nasen" durch Abfließen von Schlicker von der gekrümmten Oberfläche. Die Opazität zeigt sich dadurch, dass die direkte spektrale Transmission im Wellenlängenbereich zwischen 200 nm und 2500 nm unterhalb von 5 % liegt. Beim Sintern der Grünkörperschicht verschwinden die Bestandteile des Tensids fast vollständig.

Der oben beispielhaft beschriebene Schlicker und die unter Einsatz dieses Schlickers erhaltenen Ergebnisse des Beschichtungsversuchs sowie weiterer Beschichtungsversuche mit anderen Schlicker-Zusammensetzungen sind in Tabelle 1 aufgeführt.

**Tabelle 1**

| **Nr.** | **K1** | **K2** | **K3** | **K4** | **K5** | **"R"** | **"H"** |
|---|---|---|---|---|---|---|---|
| **1** | 33/8 | 63,5/15 | 3,5/0,04 | 0,015 | 25/(70/30) | ++ | ++ |
| **2** | 20/8 | 63,5/15 | 3,5/0,04 | 0,015 | 25/(70/30) | + | 0 |
| **3** | 15/8 | 63,5/15 | 3,5/0,04 | 0,015 | 25/(70/30) | 0 | - |
| **4** | 33/8 | 40/15 | 3,5/0,04 | 0,015 | 25/(70/30) | 0 | + |
| **5** | 33/8 | 35/15 | 3,5/0,04 | 0,015 | 25/(70/30) | - | 0 |
| **6** | 33/8 | 63,5/15 | 0 | 0,015 | 25/(70/30) | + | - |
| **7** | 33/8 | 63,5/15 | 10/0,04 | 0,015 | 25/(70/30) | - | + |
| **8** | 33/8 | 63,5/15 | 3,5/0,04 | 0 | 25/(70/30) | 0 | - |
| **9** | 33/8 | 63,5/15 | 3,5/0,04 | 0,015 | 33/(70/30) | - | - |
| **10** | 33/8 | 63,5/15 | 3,5/0,04 | 0,015 | 20(70/30) | + | 0 |
| **11** | 33/20 | 63,5/15 | 3,5/0,04 | 0,015 | 25/(70/30) | 0 | ++ |
| **12** | 33/8 | 63,5/40 | 3,5/0,04 | 0,015 | 25/(70/30) | 0 | ++ |

Erläuterungen zu Tabelle 1:
- Komponenten K1, K2, K3: Konzentrationsangaben in Gew.-% (bezogen auf den Feststoffanteil des Schlickers) / mittlere Partikelgröße in µm (D₅₀-Wert)
- Komponente K4: Konzentration von Triton X-100" in Vol.-% (bezogen auf das Flüssigkeitsvolumen des Sprühschlickers)
- Komponente K5: Gewichtsanteil der Dispersionsflüssigkeit in Gew.-% / Anteile von Wasser und Alkohol (in Vol.-% bezogen auf das Gesamtvolumen der Dispersionsflüssigkeit)
- "R" ist ein qualitatives Maß für die visuell erfasste Rissbildung der getrockneten Schlickerschicht.
- "H" ist ein qualitatives Maß für die visuell erfasste Homogenität der getrockneten Schlickerschicht.
- Die Proben Nr. 8 und 9 sind Vergleichsbeispiele.
- Die Proben Nr. 2 bis 7 sind nicht unter die Erfindung fallende Referenzbeispie le.
- Symbolik der qualitativen Bewertung:
   ++ sehr gut
   + gut
   0 akzeptabel
   - schlecht

Die qualitativen Ergebnisse von Tabelle 1 zeigen, dass bei Einsatz eines Sprühschlickers mit der Zusammensetzung gemäß Probe 1, ein Quarzglas-Bauteil mit einer besonders homogenen und rissarmen SiO₂-Oberflächenschicht erhalten wird.

## Patentansprüche

1. Verfahren zur Herstellung eines beschichteten Bauteils aus Quarzglas, indem ein Basiskörper aus Quarzglas bereitgestellt wird, der eine Beschichtungsfläche aufweist, auf die eine SiO₂-Schlickerschicht durch Aufsprühen eines SiO₂-Schlickers mit einem Feststoffgehalt im Bereich zwischen 70 und 80 Gew.-% aufgebracht wird, Trocknen der Schlickerschicht zu einer Grünkörperschicht, und Sintern der Grünkörperschicht zu einer SiO₂-haltigen Funktionsschicht, wobei der Schlicker in einer Dispersionsflüssigkeit folgende Komponenten enthält:
(a) splittrige, durch Mahlen hergestellte, amorphe SiO₂-Körnung mit einer Korngrößenverteilung mit einem D₅₀-Wert im Bereich zwischen 3 µm und 30 µm mit einem auf den gesamten Feststoffgehalt bezogenen Gewichtsanteil von mindestens 10 Gew.-%,
(b) sphärische, amorphe SiO₂-Teilchen mit einer Teilchengrößenverteilung mit einem D₅₀-Wert im Bereich zwischen 1 µm und 50 µm, mit einem auf den gesamten Feststoffgehalt bezogenen Gewichtsanteil von mindestens 30 Gew.-%,
(c) SiO₂-Nanoteilchen mit Teilchengrößen von weniger als 100 nm mit einem auf den gesamten Feststoffgehalt bezogenen Gewichtsanteil zwischen 0,2 Gew.-% und 10 Gew.-%,
(d) ein nichtionisches, alkalifreies Tensid mit einem auf das Volumen der Dispersionsflüssigkeit bezogenen Anteil im Bereich von 0,005 bis 0,5 %,
mit der Maßgabe, dass sich die Komponenten (a), splittrige SiO₂-Körnung, (b), sphärische SiO₂-Teilchen, und (c),SiO₂-Nanoteilchen, ergänzen zu 100 Gew.-% SiO₂-Feststoffgehalt.

2. Verfahren nach Anspruch 1, **dadurch gekennzeichnet, dass** die splittrige, amorphe SiO₂-Körnung mit einem auf den gesamten Feststoffgehalt bezogenen Gewichtsanteil im Bereich von 20 bis 60 Gew.-% vorliegt.

3. Verfahren nach Anspruch 1 oder 2, **dadurch gekennzeichnet, dass** die splittrige, amorphe SiO₂-Körnung eine Korngrößenverteilung mit einem D₅₀-Wert im Bereich zwischen 5 µm und 20 µm aufweist.

4. Verfahren nach Anspruch 1, **dadurch gekennzeichnet, dass** die sphärische, amorphe SiO₂-Körnung mit einem auf den gesamten Feststoffgehalt bezogenen Gewichtsanteil im Bereich von 40 bis 80 Gew.-% vorliegt.

5. Verfahren nach einem der vorhergehenden Ansprüche, **dadurch gekennzeichnet, dass** die sphärische amorphe SiO₂-Körnung eine Korngrößenverteilung mit einem D₅₀-Wert im Bereich zwischen 5 µm und 40 µm aufweist.

6. Verfahren nach einem der vorhergehenden Verfahrensansprüche, **dadurch gekennzeichnet, dass** die SiO₂-Nanoteilchen mit einem auf den gesamten Feststoffgehalt bezogenen Gewichtsanteil im Bereich von 3 bis 8 Gew.-% vorliegen.

7. Verfahren nach einem der vorhergehenden Ansprüche, **dadurch gekennzeichnet, dass** das Tensid mit einem auf das Volumen der Dispersionsflüssigkeit bezogenen Anteil im Bereich von 0,005 bis 0,05 % vorliegt.

8. Verfahren nach einem der vorhergehenden Ansprüche, **dadurch gekennzeichnet, dass** als Dispersionsflüssigkeit ein Gemisch aus Wasser und einem organischen Lösungsmittel mit niedrigerer Siedetemperatur, vorzugsweise einem Alkohol, eingesetzt wird.

9. Verfahren nach einem der vorhergehenden Ansprüche, **dadurch gekennzeichnet, dass** der Feststoffgehalt des SiO₂-Schlickers im Bereich zwischen 74 und 78 Gew.-% liegt.

10. Verfahren nach einem der vorhergehenden Verfahrensansprüche, **dadurch gekennzeichnet, dass** zum Erzeugen der Funktionsschicht mehrere aufeinander folgende Lagen der SiO₂-Schlickerschicht aufgebracht werden.

11. Verfahren nach Anspruch 10, **dadurch gekennzeichnet, dass** über die Dicke der Funktionsschicht benachbarte Lagen unterschiedliche Zusammensetzungen aufweise.

12. Verfahren nach einem der vorhergehenden Verfahrensansprüche, **dadurch gekennzeichnet, dass** die Funktionsschicht mit einer Schichtstärke im Bereich zwischen 0,1 mm und 4 mm erzeugt wird.

## Claims

1. A method for producing a coated component of quartz glass in that a base body of quartz glass is provided that has a coating surface onto which a SiO₂ slurry layer with a solid content in the range between 70 and 80 % by wt. is applied by spraying a SiO₂ slurry thereon, drying the slurry layer to obtain a green body layer, and sintering the green body layer to obtain a SiO₂-containing functional layer, wherein the slurry contains the following components in a dispersion liquid:
(a) splintery amorphous SiO₂ granules with a grain size distribution having a D₅₀ value in the range between 3 µm and 30 µm, with a weight fraction of at least 10% by wt., based on the total solids content,
(b) spherical amorphous SiO₂ particles with a particle size distribution with a D₅₀ value in the range between 1 µm and 50 µm, with a weight fraction of at least 30% by wt., based on the total solids content,
(c) SiO₂ nanoparticles with particle sizes of less than 100 nm with a weight fraction between 0.2% by wt. and 10% by wt., based on the total solids content,
(d) a non-ionic, alkali-free surfactant with a fraction in the range of from 0.005% to 0.5%, based on the volume of the dispersion liquid,
provided that splintery amorphous Si02 granules, spherical amorphous SiO₂ particles and Si02 nanoparticles add up to 100% by wt. of the SiO₂ solids content.

2. The method according to claim 1, **characterized in that** the splintery amorphous SiO₂ granules are present with a weight fraction in the range of 20% by wt. to 60% by wt., based on the total solids content.

3. The method according to claim 1 or 2, **characterized in that** the splintery amorphous SiO₂ granules have a grain size distribution with a D₅₀ value in the range between 5 µm and 20 µm.

4. The method according to claim 1, **characterized in that** the spherical amorphous SiO₂ granules are present with a weight fraction in the range of 40% by wt. to 80% by wt., based on the total solids content.

5. The method according to any one of the preceding claims, **characterized in that** the spherical amorphous SiO₂ granules have a grain size distribution with a D₅₀ value in the range between 5 µm and 40 µm.

6. The method according to any one of the preceding method claims, **characterized in that** the SiO₂ nanoparticles are present with a weight fraction in the range of 3% by wt. to 8% by wt., based on the total solids content.

7. The method according to any one of the preceding claims, **characterized in that** the surfactant is present with a fraction in the range of 0.005% to 0.05%, based on the volume of the dispersion liquid.

8. The method according to any one of the preceding claims, **characterized in that** a mixture of water and an organic solvent with a low boiling temperature, preferably an alcohol, is used as the dispersion liquid.

9. The method according to any one of the preceding claims, **characterized in that** the solids content of the SiO₂ slurry is in the range between 74 and 78% by wt.

10. The method according to any one of the preceding method claims, **characterized in that** a plurality of successive layers of the SiO₂ slurry layer are applied for producing the functional layer.

11. The method according to claim 10, **characterized in that** neighboring layers referring to the thickness of the functional layer have different compositions.

12. The method according to any one of the preceding method claims, **characterized in that** the functional layer is produced with a layer thickness in the range between 0.1 mm and 4 mm.

## Revendications

1. Procédé de fabrication d'un composant revêtu constitué de verre de quartz par fourniture d'un corps de base en verre de quartz qui présente une surface de revêtement sur laquelle une couche de barbotine de SiO₂ est appliquée par pulvérisation d'une barbotine de SiO₂ ayant une teneur en matière solide située dans la plage comprise entre 70 et 80% en poids, séchage de la couche de barbotine pour obtenir une couche de corps vert et frittage de la couche de corps vert pour obtenir une couche fonctionnelle contenant du SiO₂, la barbotine contenant les composants suivants dans un liquide de dispersion :
(a) granulation de SiO₂ amorphe, friable, obtenue par broyage, ayant une répartition granulométrique avec une valeur D₅₀ située dans la plage comprise entre 3 µm et 30 µm, avec une proportion en poids, par rapport à la teneur totale en matière solide, d'au moins 10% en poids,
(b) particules de SiO₂ amorphes, sphériques ayant une répartition granulométrique avec une valeur D₅₀ située dans la plage comprise entre 1 µm et 50 µm, avec une proportion en poids, par rapport à la teneur totale en matière solide, d'au moins 30% en poids,
(c) nanoparticules de SiO₂ ayant des grosseurs de particules de moins de 100 nm avec une proportion en poids, par rapport à la teneur totale en matière solide, comprise entre 0,2% en poids et 10% en poids,
(d) un tensioactif non ionique, exempt d'alcali, ayant une proportion, par rapport au volume du liquide de dispersion, située dans la plage de 0,005 à 0,5%,
avec la condition que les composants (a), la granulation de SiO₂ friable (b), les particules de SiO₂ sphériques et (c) les nanoparticules de SiO₂ se complètent à 100% en poids de teneur en particules de SiO₂.

2. Procédé selon la revendication 1, **caractérisé en ce que** la granulation de SiO₂ amorphe, friable est présente avec une proportion en poids, par rapport à la teneur totale en matière solide, située dans la plage de 20 à 60% en poids.

3. Procédé selon la revendication 1 ou 2, **caractérisé en ce que** la granulation de SiO₂ amorphe, friable présente une répartition granulométrique avec une valeur D₅₀ située dans la plage comprise entre 5 µm et 20 µm.

4. Procédé selon la revendication 1, **caractérisé en ce que** la granulation de SiO₂ amorphe, sphérique est présente avec une proportion en poids, par rapport à la teneur totale en matière solide, située dans la plage de 40 à 80% en poids.

5. Procédé selon l'une quelconque des revendications précédentes, **caractérisé en ce que** la granulation de SiO₂ amorphe, sphérique présente une répartition granulométrique avec une valeur D₅₀ située dans la plage comprise entre 5 µm et 40 µm.

6. Procédé selon l'une quelconque des revendications précédentes, **caractérisé en ce que** les nanoparticules de SiO₂ sont présentes avec une proportion en poids, par rapport à la teneur totale en matière solide, située dans la plage de 3 à 8% en poids.

7. Procédé selon l'une quelconque des revendications précédentes, **caractérisé en ce que** le tensioactif est présent, par rapport au volume du liquide de dispersion, dans une proportion située dans la plage de 0,005 à 0,05%.

8. Procédé selon l'une quelconque des revendications précédentes, **caractérisé en ce qu'**un mélange constitué d'eau et d'un solvant organique ayant une basse température de fusion, de préférence un alcool, est utilisé en tant que liquide de dispersion.

9. Procédé selon l'une quelconque des revendications précédentes, **caractérisé en ce que** la teneur en matière solide de la barbotine de SiO₂ est située dans la plage comprise entre 74 et 78% en poids.

10. Procédé selon l'une quelconque des revendications précédentes, **caractérisé en ce que** pour générer la couche fonctionnelle, plusieurs couches successives de la couche de barbotine de SiO₂ sont appliquées.

11. Procédé selon la revendication 10, **caractérisé en ce que** des couches voisines au-dessus de l'épaisseur de la couche fonctionnelle présentent des compositions différentes.

12. Procédé selon l'une quelconque des revendications précédentes, **caractérisé en ce que** la couche fonctionnelle est générée avec une épaisseur de couche située dans la plage comprise entre 0,1 mm et 4 mm.
